# EUROPÄISCHE PATENTSCHRIFT

(11) **EP 0 671 812 B1**
(45) Veröffentlichungstag und Bekanntmachung des Hinweises auf die Patenterteilung: **20.05.1998**
(21) Anmeldenummer: 95101574.2
(22) Anmeldetag: 07.02.1995
(51) Int. Cl.: H02P 7/638, H02P 1/24

(54) **Schaltungsanordnung zur Drehzahlregelung von Elektromotoren**
Circuit arrangement for controlling the speed of electric motors
Montage d'un circuit pour le réglage de vitesse de moteurs électriques

(30) Priorität: 08.03.1994 DE 4407634
(43) Veröffentlichungstag der Anmeldung: 13.09.1995
(73) Patentinhaber: Metabowerke GmbH & Co., D-72622 Nürtingen (DE)
(72) Erfinder: Stickel, Wolfgang, Dipl.-Ing. (FH), D-72660 Beuren (DE)
(74) Vertreter: Dreiss, Fuhlendorf, Steimle & Becker, Patentanwälte

(56) Entgegenhaltungen:
- EP-A- 0 033 353
- DE-C- 3 325 698
- US-A- 3 735 227
- US-A- 3 757 186

## Beschreibung

Die vorliegende Erfindung bezieht sich auf eine Schaltungsanordnung zur Regelung der Drehzahl von Universalmotoren nach dem Oberbegriff des Anspruchs 1.

Eine derartige Schaltungsanordnung ist aus dem Datenbuch 1991/92 "Integrated Circuits, Industrial Applications" der Firma Telefunkten Elektronik GmbH, Heilbronn, S. 141 ff. beschrieben. Bei dieser bekannten Schaltungsanordnung wird eine, dort ebenfalls beschriebene und als IC-Baustein U2008B ausgeführte, Phasenanschnittsteuerschaltung verwendet, bei deren äußerer Beschaltung zur Laststromkompensation ein Trimmwiderstand, der der Last entsprechend fest eingestellt wird, oder ein fest vorgegebener Widerstand verwendet ist. Eine derartige Regelung wird üblicherweise auf die kleinste Drehzahl ausgelegt, da dort die Motoren am empfindlichsten reagieren. Dies bedeutet bei dieser bekannten Schaltungsanordnung, daß die Laststromkompensation in einem unteren Drehzahlbereich, für den sie ausgelegt ist, optimal ist, daß sie jedoch in oberen Drehzahlbereichen praktisch keine Wirkung mehr zeigt. Mit anderen Worten, die bekannte Schaltungsanordnung kann nicht für den gesamten Drehzahlbereich, in welchem ein Universalmotor von Hand eingestellt werden kann, optimal ausgelegt werden.

Aufgabe der vorliegenden Erfindung ist es deshalb, eine Schaltungsanordnung der eingangs genannten Art zu schaffen, mit der eine optimale Nachregelung bei Last im gesamten vorgesehenen Drehzahlbereich erreicht werden kann.

Zur Lösung dieser Aufgabe sind bei einer Schaltungsanordnung der genannten Art die im Anspruch 1 angegebenen Merkmale vorgesehen.

Durch die erfindungsgemäßen Maßnahmen ist es möglich, den weiteren Regelwiderstand zur Laststromkompensation zuzuschalten oder zu überbrücken. Dies bedeutet, daß bei geringer Drehzahl nur der eine Regelwiderstand wegen des Kurzschlußes des weiteren Regelwiderstandes zugeschaltet ist, während bei höheren Drehzahlen der weitere Regelwiderstand in Reihe zum einen Regelwiderstand vorhanden ist und damit eine optimale Laststromkompensation auch in hohen Drehzahlbereichen möglich ist. Diese optimale Laststromkompensation im gesamten vorgesehenen Drehzahlbereich ist mit wenigen preiswerten Bauteilen erreichbar. Es ist auch möglich, dies statt in einer in zwei oder mehr Stufen zu erreichen, indem mehr als ein weiterer Regelwiderstand vorgesehen ist, dem jeweils eine elektronischer Schalteinrichtungen parallelgeschaltet ist, so daß die weiteren Regelwiderstände stufenweise zu- bzw. weggeschaltet werden können.

Mit den Merkmalen gemäß Anspruch 2 ist ein bevorzugtes Ausführungsbeispiel mit wenigen preiswerten Bauteilen, nämlich Transistor und Widerstand erreicht.

Der Transistor zum Zu- bzw. Wegschalten des weiteren Regelwiderstandes kann die Funktion eines einfachen Schalters ausüben. Mit den Merkmalen gemäß Anspruch 3 ist erreicht, daß der Transistor als Verstärker wirkt, wodurch eine variable Regelung erreicht wird.

In bevorzugter Weise sind ferner die Merkmale gemäß Anspruch 4 vorgesehen.

Bei der eingangs erwähnten bekannten Schaltungsanordnung kann anstelle der Laststromkompensation eine Schaltungsanordnung mit einem Sanftanlauf realisiert werden, die aus einem Kondensator besteht, der anstelle des Widerstandes zur Laststrommessung zwischen dem Anschluß der Phasenanschnittsteuerschaltung und dem Nulleiter der Netzspannung angeordnet ist. Gemäß einem weiteren Ausführungsbeispiel vorliegender Erfindung, wie es durch die Merkmale gemäß Anspruch 5 verwirklicht ist, ist jedoch die Sanftanlaufschaltung in die äußere Beschaltung für die Laststromkompensation integriert. Dabei wird in vorteilhafter Weise der die Drehzahl beeinflußende Steuerwert solange vom über den Widerstand aufladenden Kondensator der RC-Reihenschaltung beeinflußt, bis der eingestellte Drehzahlwert erreicht ist.

Um zu diesem Zeitpunkt eine Entkopplung der Sanftanlaufschaltung von der Drehzahlregelung zu erreichen, sind die Merkmale gemäß Anspruch 6 vorgesehen.

Mit den Merkmalen gemäß Anspruch 7 ist erreicht, daß nach Ausschalten der Schaltung der für den Sanftanlauf maßgebende Kondensator der RC-Reihenschaltung schnell entladen wird, so daß nach kurzzeitigem Ausschalten ein erneuter Sanftanlauf möglich ist.

Weitere Einzelheiten der Erfindung sind der folgenden Beschreibung zu entnehmen, in der die Erfindung anhand der in der Zeichnung dargestellten Ausführungsbeispiele näher beschrieben und erläutert ist. Es zeigen:
- Figur 1: das Blockschaltbild einer bekannten Schaltungsanordnung zur Drehzahlregelung in Abhängigkeit vom erfaßten Laststrom,
- Figur 2: ein Schaltbild einer Schaltungsanordnung zur Drehzahlregelung gemäß einem bevorzugten Ausführungsbeispiel vorliegender Erfindung und
- Figur 3: ein der Figur 2 entsprechendes Schaltbild, jedoch nur teilweise dargestellt und durch eine Sanftanlaufschaltung ergänzt.

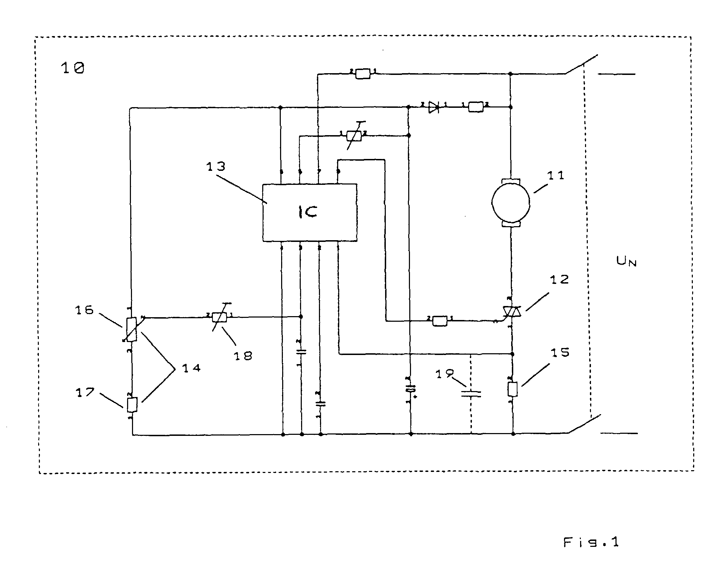

Figur 1 zeigt eine bekannte Schaltungsanordnung 10 zur Regelung der Drehzahl eines Motors 11, der mit Netzspannung U_{N} von bspw. 220 Volt betrieben wird. Im Motorstromkreis ist ein steuerbarer Leistungshalbleiter in Form eines Triac 12 angeordnet, der von einer Phasenanschnittsteuerschaltung 13 in beiden Halbwellen der Netzspannung angesteuert wird. Zusätzlich liegt ein Widerstand 15 in Reihe, an dem der Motorstrom am Anschluß 1 der Phasenanschnittsteuerschaltung gemessen wird. Die Phasenanschnittsteuerschaltung 13, die in Figur 1 als Blockschaltbild dargestellt ist, ist als integrierter Schaltungsbaustein (IC) ausgebildet. Die äußere Beschaltung der als IC ausgebildeten Phasenanschnittsteuerschaltung 13 an den einzelnen Anschlüssen 1 bis 8 ergibt sich ebenfalls aus der Figur 1. Wesentlich in diesem Zusammenhang ist die äußere Beschaltung zur Drehzahlregelung aufgrund einer Laststromkompensation. Parallel zum Anschluß 4 und 5 ist ein Spannungsteiler 14 vorgesehen, der ein Potentiometer 16 zur Voreinstellung der Leerlaufdrehzahl und einen festen Widerstand 17 in Reihenschaltung besitzt. Der Abgriff des Potentiometers 16 führt über einen fest eingestellten Trimmwiderstand 18 zum Anschluß 3 des IC. Der Trimmwiderstand 18 dient als Regelwiderstand bzw. Laststrom-Kompensationswiderstand und wird für den betreffenden Anwendungsfall entsprechend der untersten vorzuwählenden Leerlaufdrehzahl fest eingestellt. Die bekannte Schaltungsanordnung kann entweder zur Laststromkompensation oder als Sanftanlaufschaltung benützt werden. Gestrichelt ist eine Verbindung zwischen dem Anschlußpunkt 1 des IC und dem Null-Leiter der Netzspannung eingezeichnet, in der ein Kondensator 19 anstelle des Widerstandes 15 angeordnet ist, der die Sanftanlaufschaltung der bekannten Schaltungsanordnung darstellt.

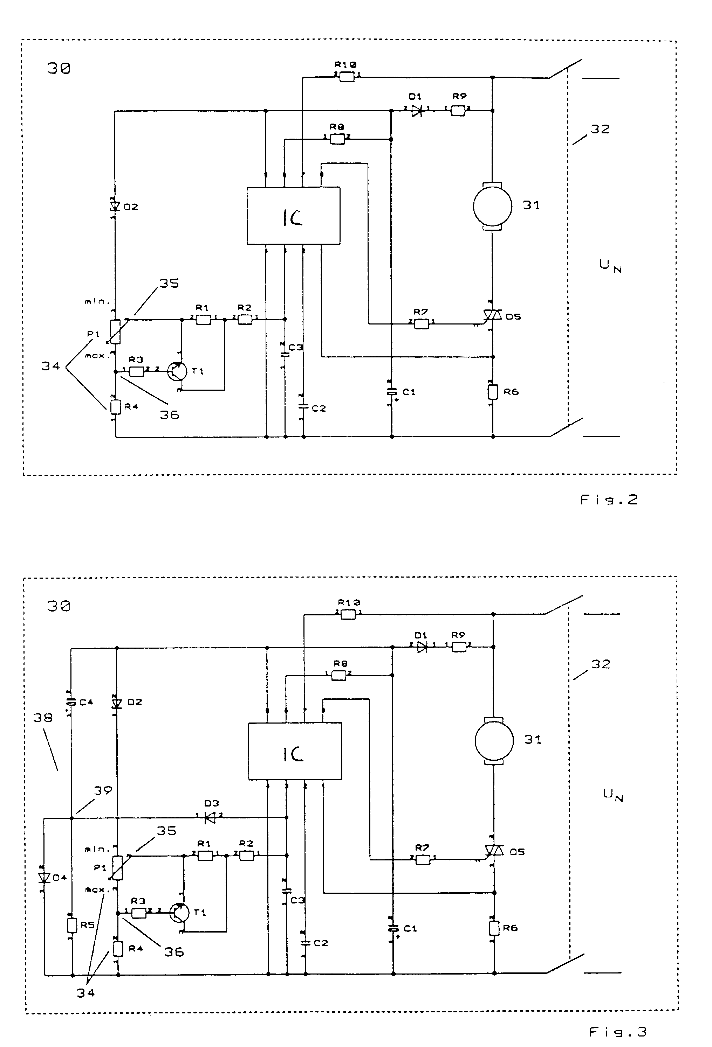

Figur 2 zeigt das Ausführungsbeispiel einer Schaltungsanordnung 30 gemäß der vorliegenden Erfindung, die den integrierten Schaltungsbaustein IC, der die Phasenanschnittsteuerschaltung für die Schaltungsanordnung 30 vorgibt, verwendet. Die äußere Beschaltung dieses IC bei der Schaltungsanordnung 30 ist, was die Anschlüsse 2, 4, 5, 6, 7 und 8 anbetrifft, im wesentlichen dieselbe. Der Anschluß 2 des IC ist über einen Kondensator C2 und der Anschluß 4 unmittelbar mit dem Nullteiler U_{N} verbunden. Der Anschluß 5 ist unmittelbar und der Anschluß 6 über einen Widerstand R8 mit einer Reihenschaltung aus einer Diode D1 und einem Widerstand R9 verbunden. Diese Reihenschaltung D1, R9 ist ebenso wie ein mit dem Anschluß 7 verbundener Widerstand R10 mit der Phase der Netzspannung U_{N} verbunden. Der Anschluß 8 des IC führt über einen Vorwiderstand R7 zum Steueranschluß des Triac D5, der in Reihe zum Motor 31 liegt.

Der Anschluß 1 des IC führt beim Ausführungsbeispiel über einen Widerstand R6 zum Null-Leiter der Netzspannung U_{N}, wobei der Widerstand in Reihe zum Triac D5 geschaltet ist, wie dies beim Stand der Technik dann der Fall ist, wenn die Schaltung als Laststromkompensation benützt wird ohne Sanftanlauf, also der Kondensator 19 nicht vorhanden ist.

Beim in Figur 2 dargestellten Ausführungsbeispiel besitzt Spannungsteiler 34 ein Potentiometer P1 und einen festen Widerstand R4 in Reihenschaltung, wobei dieser Reihenschaltung ferner eine Zenerdiode D2 in dargestellter Weise in Reihe geschaltet ist. Diese Gesamtreihenschaltung aus Zenerdiode D2, Potentiometer P1 und Widerstand R4 liegt parallel zu bzw. zwischen den Anschlüssen 5 und 4 des IC. Der Abgriff 35 des Potentiometers P1, das zur Vorgabe der Leerlaufdrehzahl dient ist über eine Reihenschaltung aus zwei Widerständen R1 und R2 unmittelbar mit dem Anschluß 3 des IC verbunden. Die beiden Widerstände R1 und R2 sind fest vorgegeben und besitzen die Funktion von Regel- bzw. Laststrom-Kompensationswiderstände. Parallel zum Widerstand R1 ist die Emitter-Kollektor-Strecke eines Transistors T1 angeordnet, dessen Basis über einen Widerstand R3 mit einem Punkt 36 zwischen dem Potentiometer P1 und dem Widerstand R4 des Spannungsteilers 34 verbunden ist.

Die Funktion dieser soeben beschriebenen Regelschaltung ist folgende: Da die Basis des Transistors T1 über den Basiswiderstand R3 von einem Punkt 36 des Spannungsteilers 34 aus angesteuert wird und da der Widerstand R1 im Transistorkreis liegt, kann der Wert der Summe aus den beiden Laststrom-Kompensationswiderständen R1 und R2 verändert werden. Das Potential des Punktes 35 ändert sich mit der Stellung des Abgriffs am Potentiometer P1. Beispielsweise ist dieser Schaltungsteil so ausgelegt, daß in der Stellung "max" des Potentiometers P1 der Transistor T1 sperrt, so daß der Laststrom-Kompensationswiderstand aus der Summe der beiden Widerstandswerte von R1 und R2 besteht. Dies entspricht einer maximalen Nachregelung der Drehzahl bei Belastung. In der Stellung "min" des Potentiometers P1 dagegen wird der Transistor T1 derart angesteuert, daß er öffnet und so den zusätzlichen Widerstand R1 kurzschließt. Dies bedeutet, daß lediglich der Widerstand R2, also ein erheblich kleinerer Widerstandswert für die Regelung im Lastbetrieb zur Wirkung kommt. In Zwischenstellungen des Potentiometers P1 wirkt der Transistor T1 als Verstärker, wodurch eine variable Einstellung der für die Laststromkompensation geltenden Widerstandswerte erreicht ist.

Gemäß einem nicht dargestellten weiteren Ausführungsbeispiel vorliegender Erfindung ist der Basiswiderstand R3 überbrückt bzw. weggelassen, was hier bedeutet, daß der Transistor T1 als Schalter betrieben wird, d.h. den Widerstand R1 zur Laststromkompensation entweder voll zuschaltet oder kurzschließt.

Eine weitere Möglichkeit gemäß einem ebenfalls nicht dargestellten Ausführungsbeispiel besteht darin, zwei oder mehr zusätzliche Widerstände zur Laststromkompensation vorzusehen, von denen jeder jeweils mit Hilfe eines Transistors zu- bzw. weggeschaltet wird, wobei jeder Transistor mit unterschiedlichem Basispotential angesteuert ist.

Es versteht sich ferner, daß statt des in Figur 2 dargestellten npn-Transistors T1 andere Transistoren, wie bspw. Feldeffekttransistoren Verwendung finden können.

Mit der erfindungsgemäßen Laststromkompensationschaltung ist gemäß Figur 3 eine Sanftanlaufschaltung 38 zusätzlich integriert, die einen Kondensator C4, einen dazu in Reihe geschalteten Widerstand R5, eine Diode D3 und eine Diode D4 aufweist. Die Reihenschaltung aus Kondensator C4 und Widerstand R5 ist parallel zur Reihenschaltung aus Spannungsteiler 34 und Zenerdiode D2 und damit zwischen den Abschlüssen 5 und 4 des IC angeordnet. Die Diode D4 ist zwischen der Anschluß 4 des IC bzw. dem Null-Leiter von U_{N} und einem Zwischenabgriff 39 zwischen dem Kondensator C4 und dem Widerstand R5 angeordnet. Demgegenüber ist die Diode D3 zwischen dem Zwischenabgriff 39 und der Anschluß 3 des IC angeordnet.

Bei diesem zweiten Ausführungsbeispiel gemäß Figur 3 wird die zu regelnde Spannung des Motors 31 und somit der die Drehzahl beeinflußende Steuerwert durch den Kondensator C4 zusätzlich beeinflußt. Zunächst ist der Kondensator C4 entladen. Nach dem Einschalten des Schalters 32 des betreffenden Gerätes wird der Kondensator C4 über den Widerstand R5 aufgeladen. Der die Drehzahl beeinflußende Steuerwert wird solange vom Kondensator C4 beeinflußt, bis der durch das Potentiometer P1 voreingestellte Drehzahlwert erreicht ist. Nach diesem Zeitpunkt ist die weitere Aufladung des Kondensators C4 nicht mehr maßgebend, weil die Diode D3 eine Entkopplung der Sanftanlaufschaltung 38 von der Schaltung zur Laststromkompensation bewirkt. Nach dem Abschalten des Schalters 32 wird der Kondensator C4 über die Diode D4 schnell entladen, so daß gewährleistet ist, daß bereits nach kurzzeitigem Ausschalten des Motors 31 ein erneuter Sanftanlauf möglich ist.

## Patentansprüche

1. Schaltungsanordnung (30) zur Regelung der Drehzahl, insbesondere der Drehzahlkonstanz zwischen Leerlauf und Vollast, von Universalmotoren (31) insbesondere in Elektrowerkzeugen, mit einer Phasenanschnittsteuerschaltung (IC), die an einem Ausgang über einen Regelwiderstand (R2) mit einem Abgriff eines Spannungsteilers (34) zur Sollwertvorgabe verbunden ist und deren Triggerausgang einen im Motorstromkreis angeordneten elektronischen Leistungsschalter (D5), bspw. Triac ansteuert, **dadurch gekennzeichnet,** daß zwischen dem Abgriff (35) des Spannungsteilers (34) und dem einen Ausgang der Phasenanschnittsteuerschaltung (IC) mindestens ein weiterer Regelwiderstand (R1) vorgesehen ist, dem eine vorzugsweise elektronische Schalteinrichtung (T1) parallel geschaltet ist, die von einem Punkt (36) im Spannungsteiler (34) angesteuert ist.

2. Schaltungsanordnung nach Anspruch 1, dadurch gekennzeichnet, daß die elektronische Schalteinrichtung durch einen Transistor (T1) gebildet ist, zwischen dessen Emitter und Kollektor der weitere Regelwiderstand (R1) geschaltet ist und dessen Basis mit dem Spannungsteiler (34) verbunden ist.

3. Schaltungsanordnung nach Anspruch 2, dadurch gekennzeichnet, daß zwischen der Basis des Transistors (T1) und dem Spannungsteiler (34) ein Widerstand (R3) angeordnet ist.

4. Schaltungsanordnung nach mindestens einem der Ansprüche 1 bis 3, dadurch gekennzeichnet, daß der Spannungsteiler (34) mit einer Zenerdiode (D2) in Reihe geschaltet ist.

5. Schaltungsanordnung mit einer Sanftanlaufschaltung (38), nach mindestens einem der vorhergehenden Ansprüche, dadurch gekennzeichnet, daß parallel zum Spannungsteiler (34) eine RC-Reihenschaltung (C4, R5) angeordnet ist.

6. Schaltungsanordnung nach Anspruch 5, dadurch gekennzeichnet, daß die RC-Reihenschaltung (C4, R5) an einem Zwischenabgriff (39) über eine Entkopplungsdiode (D3) mit dem einen Ausgang der Phasenanschnittsteuerschaltung (IC) verbunden ist.

7. Schaltungsanordnung nach Anspruch 5 oder 6, dadurch gekennzeichnet, daß parallel zum Widerstand (R5) der RC-Reihenschaltung (C4, R5) eine Entladediode (D4) vorgesehen ist.

## Claims

1. Circuit arrangement (30) for controlling the speed, in particular the speed constancy between idling and full load, of universal motors (31) in particular in electric tools, having a phase-control circuit (IC), which is connected at one output via an adjustable resistor (R2) to a tap of a voltage divider (34) for the setpoint input and whose trigger output controls an electronic power switch (D5), e.g. triac, arranged in the electric circuit of the motor, characterized in that there is provided between the tap (35) of the voltage divider (34) and the one output of the phase-control circuit (IC) at least one further adjustable resistor (R1), with which there is connected in parallel a preferably electronic switching device (T1), which is controlled from a point (36) in the voltage divider (34).

2. Circuit arrangement according to Claim 1, characterized in that the electronic switching device is formed by a transistor (T1), between whose emitter and collector the further adjustable resistor (R1) is connected and whose base is connected to the voltage divider (34).

3. Circuit arrangement according to Claim 2, characterized in that a resistor (R3) is arranged between the base of the transistor (T1) and the voltage divider (34).

4. Circuit arrangement according to at least one of Claims 1 to 3, characterized in that the voltage divider (34) is connected in series with a Zener diode (D2).

5. Circuit arrangement having a soft-starting circuit (38), according to at least one of the preceding claims, characterized in that an RC series connection (C4, R5) is arranged in parallel with the voltage divider (34).

6. Circuit arrangement according to Claim 5, characterized in that the RC series connection (C4, R5) is connected at an intermediate tap (39) via a decoupling diode (D3) to the one output of the phase-control circuit (IC).

7. Circuit arrangement according to Claim 5 or 6, characterized in that a discharge diode (D4) is provided in parallel with the resistor (R5) of the RC series connection (C4, R5).

## Revendications

1. Montage d'un circuit (30) pour le réglage de vitesse, notamment de la constance de vitesse entre le ralenti et le plein régime, de moteurs universels (31), en particulier dans des outils électriques, avec un circuit de commande par coupe (IC) relié au niveau d'une sortie, par l'intermédiaire d'un rhéostat (R2), à la prise d'un diviseur de tension (34) permettant de définir la valeur de consigne et dont la sortie de déclenchement excite un disjoncteur électronique (D5) ou triac monté dans le circuit moteur, caractérisé en ce qu'il est prévu, entre la prise (35) du diviseur de tension (34) et l'une des sorties du circuit de commande par coupe (IC), au moins un autre rhéostat (R1) monté en parallèle avec un mécanisme de couplage de préférence électronique (T1) excité par un point (36) situé dans le diviseur de tension.

2. Montage d'un circuit selon la revendication 1, caractérisé en ce que le mécanisme de couplage électronique est formé par un transistor (T1) entre l'émetteur et le collecteur duquel est monté l'autre rhéostat (R1) et dont la base est reliée au diviseur de tension (34).

3. Montage d'un circuit selon la revendication 2, caractérisé en ce qu'une résistance (R3) est disposée entre la base du transistor (T1) et le diviseur de tension (34).

4. Montage d'un circuit selon au minimum une des revendications 1 à 3, caractérisé en ce que le diviseur de tension (34) est monté en série avec une diode Zener (D2).

5. Montage d'un circuit avec élément de démarrage progressif (38) selon au minimum une des revendications précédentes, caractérisé en ce qu'un montage en série RC (C4, R5) est disposé parallèlement au diviseur de tension (34).

6. Montage d'un circuit selon la revendication 5, caractérisé en ce que le montage en série RC (C4, R5) est relié, sur une prise intermédiaire (39), au moyen d'une diode de découplage (D3), à l'une des sorties du circuit de commande par coupe (IC).

7. Montage d'un circuit selon la revendication 5 ou 6, caractérisé en ce qu'une diode de décharge (D4) est prévue parallèlement à la résistance (R5) du montage en série RC (C4, R5).
